# EUROPEAN PATENT SPECIFICATION

(11) **EP 4 620 174 B1**
(45) Date of publication and mention of the grant of the patent: **28.10.2026**
(21) Application number: 22821520.8
(22) Date of filing: 23.11.2022
(51) Int. Cl.: H04L 67/1001, H04L 45/00, H04L 45/02, H04L 45/037, H04L 45/745, H04L 61/103, H04L 61/5084, H04L 9/40, H04L 43/08, H04L 67/1008, H04L 67/1029

(54) **SERVICE RE-SCHEDULING IN ROUTING ON SERVICE ADDRESSES**
NEUPLANUNG VON DIENSTEN IM ROUTING AUF DIENSTADRESSEN
REPLANIFICATION DES SERVICES DANS LE CADRE DE L'ACHEMINEMENT SUR LES ADRESSES DE SERVICE

(43) Date of publication of application: 24.09.2025
(73) Proprietor: Huawei Technologies Co., Ltd., Shenzhen, Guangdong 518129 (CN)
(72) Inventor: FRESSANCOURT, Antoine, 80992 Munich (DE); DESPOTOVIC, Zoran, 80992 Munich (DE); TROSSEN, Dirk, 80992 Munich (DE)
(74) Representative: Roth, Sebastian
(86) International application number: PCT/EP2022/083029
(87) International publication number: WO 2024/110032

(56) References cited:
- TROSSEN HUAWEI TECHNOLOGIES LM CONTRERAS TELEFONICA D: "Routing on Service Addresses", 24 October 2022 (2022-10-24), pages 1 - 31, XP015156354, Retrieved from the Internet <URL:https://tools.ietf.org/html/draft-trossen-rtgwg-rosa-00>
- LI L IANNONE D TROSSEN HUAWEI TECHNOLOGIES P LIU CHINA MOBILE Y: "Dynamic-Anycast Architecture", 15 February 2021 (2021-02-15), pages 1 - 15, XP015144195, Retrieved from the Internet <URL:https://tools.ietf.org/html/draft-li-dyncast-architecture-00>

## Description

### TECHNICAL FIELD

The present disclosure relates generally to the field of network routing, and particularly to a realization of service-based routing called Routing on Service Addresses (ROSA). More specifically, the present disclosure relates to devices and methods for re-establishing an anycast communication session with a service function.

### BACKGROUND ART

In service-based architectures, ROSA-based scheduling enables invocation of a service function *SF* deployed as multiple equivalent service instances *SFₙ, n∈[1;N]* at various network locations, via an anycast semantic.

That is, a service request submitted to a service address (e.g., "mobile.com/video" or "streamer.com/radio", possibly encoded in binary form) of the service function *SF* is served by any one of its dispersed service instances *SFₙ,* possibly according to some metric. The service request may particularly be sent as forward multicast, i.e., to more than one service instance *SFₙ,* via an ingress Service Address Router (SAR) of the requesting service client C to avoid firewall issues.

Exemplary service functions *SF* may involve, for instance, control and/or user plane network functions in a service-based architecture of 5G/6G networks, distributed video (file) delivery based on replicated storage, and distributed computing in newer 6G scenarios, such as vehicular communications, industrial networking, and the like.

The requesting service client C may need to continue communicating with the particular serving instance *SFᵢ* due to communication state being built up. In this case, the service client *C* may subsequently submit one or more affinity requests to the locator address (e.g., IPv6 address) of the serving instance *SFᵢ.* This sequence of initial request with possible subsequent affinity requests may be realized through a ROSA-specific socket, where keeping the socket connection open signifies the ongoing sending of further affinity requests to the same IPv6 locator of the initially determined serving instance, while closing the socket signifies the ending of that relationship.

Over time, the serving instance *SFᵢ* may become non-optimal, e.g., be overloaded or involve too much latency, with client mobility or changing user demand possibly causing such change. Based on the afore-mentioned metric, a renewed service request would likely be served by a "better" service instance *SFⱼ.* However, the built-up communication state of the ongoing service transaction prevents such a re-assignment (i.e., transaction mobility/handoff).

TROSSEN HUAWEI TECHNOLOGIES LM CONTRERAS TELEFONICA D "Routing on Service Addresses", DRAFT-TROSSEN-RTGWG-ROSA-OO; IETF; STANDARDWORKINGDRAFT, INTERNET, 24 October 2022, pages 1-31, discloses routing on service addresses.

LI L IANNONE D TROSSEN HUAWEI TECHNOLOGIES P LIU CHINA MOBILE Y: "Dynamic-Anycast Architecture", DRAFT-LI-DYNCAST-ARCHITECTURE-OO.TXT; IETF; 15 February 2021, pages 1-15, discloses a dynamic-anycast architecture.

### SUMMARY

It is an object to overcome the above-mentioned and other drawbacks. The foregoing and other objects are achieved by the features of the independent claims. Further implementation forms are apparent from the dependent claims, the description and the figures.

According to a first aspect, a client device is provided for re-establishing an anycast communication session with any one of a plurality of server devices of a service function being associated with an identifier. The client device comprises a processor, being configured to: obtain a trigger for the re-establishing of the anycast communication session; send a calibration request message to a routing device being adjacent to the client device; and receive a calibration response message from the routing device. The calibration request message comprises the identifier of the service function, a locator address of the client device, and a locator address of a particular server device of the service function currently serving the client device. The calibration response message comprises the identifier of the service function, the locator address of the client device, and a locator address of a specific server device of the service function prospectively serving the client device.

Anycast communication as used herein may relate to network addressing and routing wherein a single address is shared by a plurality of devices which are arranged in multiple locations.

A service function as used herein may refer to a specific service, such as a HTTPS web service.

A service request as used herein may refer to a request for a service being directed to the plurality of server devices of the service function.

First, the trigger may be communicated to ROSA in the form of a setsockopt() option on an open socket, where the latter represents the ongoing overall transaction. This is compatible with prevailing IP services.

Second, transaction mobility is client-initiated although triggers may come from other sources, such as network management, network functions (e.g., AMF for handover). This places the client in control over sending affinity requests to right service, simplifying the realization and being compatible with transaction management by replacing the sending of a new service request with the calibration request message for merely transferring transactions. This may easily be integrated into any service routing socket implementation, too.

Third, transaction mobility is network-supported through the calibration request message to which scheduling applies in a same manner as for a regular service request message. This allows for one round trip time (1-RTT) transaction mobility which is compatible with existing scheduling decisions at the client-facing routing device (i.e., ingress SAR). Thus, the benefits of service scheduling are utilized for finding the best service instance for a specific service client by explicitly requesting transaction mobility as a result of any change to a previous selection of a service instance.

In a possible implementation form, the trigger may comprise one of: a handover indication concerning the client device, a latency or throughput measurement from the particular server device of the service function currently serving the client device, and a timeout indication concerning a periodic re-establishing of the anycast communication session.

In a possible implementation form, the calibration request message may further comprise connection-specific data, such as an authentication token.

In a possible implementation form, the calibration request message may further comprise an affinity request message to the service function being associated with the identifier.

Including an affinity request message into the calibration request message even allows for zero round trip time (0-RTT) service re-scheduling. This minimizes the latency of transaction mobility, where overall performance only depends on transactional data transfer latency. When using a distributed shared data layer, this latency is equally minimal.

An affinity request as used herein may refer to a request for a service being directed to the particular service instance of the plurality of server devices of the service function.

In a possible implementation form, the processor may further be configured to postpone any affinity request message to the service function being associated with the identifier until receipt of the calibration response message.

In a possible implementation form, the calibration request message may be encapsulated in an IPv6 extension header.

In a possible implementation form, the calibration response message may be encapsulated in an IPv6 extension header.

According to a second aspect, a routing device is provided for re-establishing an anycast communication session with any one of a plurality of server devices of a service function being associated with an identifier. The routing device comprises a processor being configured to: receive a calibration request message from a client device; forward the calibration request message to any specific server device of the plurality of server devices in accordance with a forwarding table of the routing device; and forward a calibration response message received from the specific server device to the client device. The calibration request message comprises the identifier of the service function, a locator address of the client device, and a locator address of a particular server device of the service function currently serving the client device. The specific server device prospectively serves the client device and is different from the particular server device.

In a possible implementation form, the calibration request message may further comprise connection-specific data, such as an authentication token.

In a possible implementation form, the calibration request message may further comprise an affinity request message to the service function being associated with the identifier.

In a possible implementation form, the calibration request message may be encapsulated in an IPv6 extension header.

In a possible implementation form, the processor may further be configured to receive, from an adjacent device, a service announcement message of a server device of the plurality of server devices. The service announcement message comprises the identifier of the service function, and an identifier of the server device. The processor may further be configured to query the forwarding table of the routing device for an entry comprising both the identifier of the service function and the identifier of the server device. The processor may further be configured, in response to unsuccessful querying, to populate the forwarding table with the entry comprising the identifier of the service function, the identifier of the server device, and a locator address being indicative of the adjacent device. The processor may further be configured to re-advertise the service announcement message to other routing devices.

According to a third aspect, a server device is provided for re-establishing an anycast communication session with any one of a plurality of server devices of a service function being associated with an identifier. The server device comprises a processor being configured to: receive a calibration request message issued by a client device, send a transfer request message towards the particular server device, and receive a transfer response message from the particular server device. The calibration request message comprises the identifier of the service function, a locator address of the client device, and a locator address of a particular server device of the service function currently serving the client device. The transfer request message comprises the identifier of the service function, the locator address of the client device, and a locator address of the server device prospectively serving the client device. The transfer response message comprises the identifier of the service function, the locator address of the client device, and context data associated with the anycast communication session with the particular server device. The processor is further configured to configure an anycast communication session with the client device based on the received context data; and send a calibration response message towards the client device. The calibration response message comprises the identifier of the service function, the locator address of the client device, and a locator address of the server device prospectively serving the client device.

First, service instances can use own, e.g., REST/HTTP-based, mechanisms for any context data to be transferred for an ongoing transaction. Context transfer can be minimal when using shared data store (*e.g.,* etcd) by simply providing a pointer to data store for client from old to new instance.

Second, a transfer of transaction context is entirely realized at service instance level, and transaction mobility can be handled for any service/application.

In a possible implementation form, the processor may further be configured to validate the received calibration request message.

In a possible implementation form, the calibration request message and the transfer request message may respectively further comprise connection-specific data, such as an authentication token.

In a possible implementation form, the processor may further be configured to: receive a transfer request message from a specific server device prospectively serving the client device; and send a transfer response message to the specific server device. The transfer request message comprises the identifier of the service function, the locator address of the client device, and a locator address of the specific server device. The transfer response message comprises the identifier of the service function, the locator address of the client device, and context data associated with the anycast communication session with the particular server device currently serving the client device.

In a possible implementation form, the processor may further be configured to advertise a service announcement message. The service announcement message comprises the identifier of the service function, and an identifier of the server device.

According to a fourth aspect, a method is provided of operating a client device for re-establishing an anycast communication session with any one of a plurality of server devices of a service function being associated with an identifier. The method comprises obtaining a trigger for the re-establishing of the anycast communication session; sending a calibration request message to a routing device being adjacent to the client device; and receiving a calibration response message from the routing device. The calibration request message comprises the identifier of the service function, a locator address of the client device, and a locator address of a particular server device of the service function currently serving the client device. The calibration response message comprises the identifier of the service function, the locator address of the client device, and a locator address of a specific server device of the service function prospectively serving the client device.

In a possible implementation form, the method may be performed by the client device of the first aspect or any of its implementations.

According to a fifth aspect, a method is provided of operating a routing device for re-establishing an anycast communication session with any one of a plurality of server devices of a service function being associated with an identifier. The method comprises: receiving a calibration request message from a client device; forwarding the calibration request message to any specific server device of the plurality of server devices in accordance with a forwarding table of the routing device; and forwarding a calibration response message received from the specific server device to the client device. The calibration request message comprises the identifier of the service function, a locator address of the client device, and a locator address of a particular server device of the service function currently serving the client device. The specific server device prospectively serves the client device and is different from the particular server device.

In a possible implementation form, the method may be performed by the routing device of the second aspect or any of its implementations.

According to a sixth aspect, a method is provided of operating a server device for re-establishing an anycast communication session with any one of a plurality of server devices of a service function being associated with an identifier.

The method comprises receiving a calibration request message issued by a client device. The calibration request message comprises the identifier of the service function, a locator address of the client device, and a locator address of a particular server device of the service function currently serving the client device. The method further comprises sending a transfer request message towards the particular server device. The transfer request message comprises the identifier of the service function, the locator address of the client device, and a locator address of the server device prospectively serving the client device. The method further comprises receiving a transfer response message from the particular server device. The transfer response message comprises the identifier of the service function, the locator address of the client device, and context data associated with the anycast communication session with the particular server device. The method further comprises configuring an anycast communication session with the client device based on the received context data; and sending a calibration response message towards the client device. The calibration response message comprises the identifier of the service function, the locator address of the client device, and a locator address of the server device prospectively serving the client device.

In a possible implementation form, the method may be performed by the server device of the third aspect or any of its implementations.

According to a seventh aspect, a computer program is provided, comprising executable instructions which, when executed by a processor, cause the processor to perform the method of the fourth, fifth or sixth aspect or any of their implementations.

### BRIEF DESCRIPTION OF DRAWINGS

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates an exemplary network scenario in accordance with the present disclosure.
- FIG. 2: illustrates a client device, a routing device, a server device and interrelated flow diagrams of associated methods of operating said devices, in accordance with the disclosure of patent application PCT/EP2022/064615.
- FIG. 3: illustrates a client device, a routing device and server devices in accordance with the present disclosure and interrelated flow diagrams of associated methods of operating said devices in accordance with the present disclosure.

### DETAILED DESCRIPTIONS OF DRAWINGS

In the following description, reference is made to the accompanying drawings, which form part of the disclosure, and which show, by way of illustration, specific aspects of this disclosure or specific aspects in which embodiments of the present disclosure may be used. It is understood that embodiments of this disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

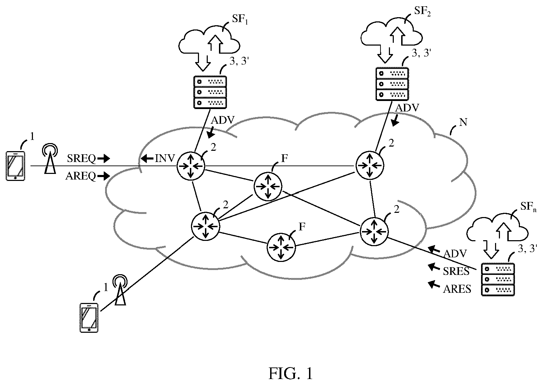

FIG. 1 illustrates an exemplary network scenario in accordance with the present disclosure.

The scenario comprises a communication network N indicated by a cloud shape and comprising routing devices 2 in accordance with the present disclosure as well as further routing / forwarding devices F interconnected by network layer (i.e., layer-3) links. The communication network N may be a routed network, such as an IP network.

The routing devices 2 of the network N are suited for ROSA-based scheduling (see above), also known as Constraint-Based Service Routing (CBSR). More specifically, the routing devices 2 are client-facing ROSA/CBSR ingress network nodes.

As used herein, service routing may refer to a routing in accordance with addressing of services rather than addressing of network interfaces. For example, service routing may use address "foo.com/bar" (in binary form, such as a hash of "foo.com/bar") instead of the IP address of foo.com/bar. A number of instances of the service can be registered in the network, all of which can receive service requests for, e.g., foo.com/bar, possibly as forward multicast (i.e., be selected for service provisioning). There may be arrangements that allow service clients 1 to maintain affinity with one or more particular instances of the service function after having been directed there for a first time. For example, affinity with a service instance may be achieved by directing subsequent affinity requests to a locator address (e.g., IP address) of said service instance.

As used herein, ROSA/CBSR may refer to a service routing wherein service instances can constrain their selection for service provisioning by advertising constraint information together with service identifiers. Such information may be piggy-backed on packets of routing protocols and thus be distributed with a possibility for aggregation and/or suppression of advertisements. Forwarding operation may be a two-stage process of longest prefix or hash-based match (against service identifier) and constraint matching. This can be implemented in P4 (a programming language for network devices in software-defined networks, specifying how data plane devices process packets), for example, at line-speed.

Attached to the communication network N is a number of client devices (i.e., clients) 1 deployed at various network locations, and a number of service instances *SFₙ* of a service function *SF* deployed at server devices (i.e., servers) 3, 3' at various network locations as well.

Service routing may be deployed in limited domains of the global internet, but interconnection to existing Internet services and other ROSA/CBSR domains may be realized using locator-based forwarding in peer(ing) networks (not shown).

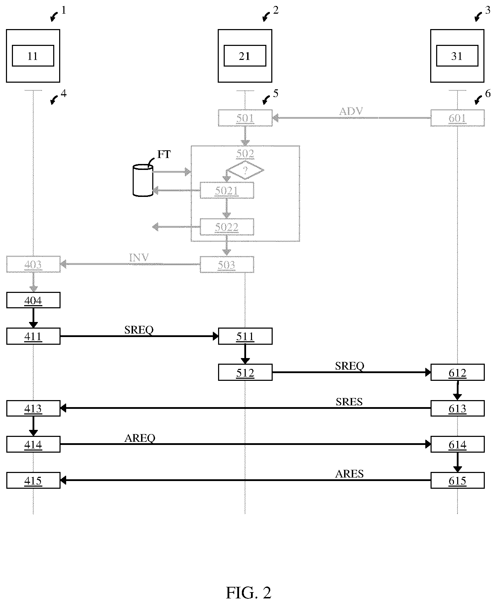

A brief outline of the workflow will be given in connection with FIG. 2 below.

In the subsequent passages, a notation will be as follows:

| | |
|---|---|
| *SF* | Service function |
| *SFₙ* | n^{th} service function instance |
| *SID* | Service address (service function identifier) |
| *IP_{NH}* | Locator address of a next hop device *NH* (i.e., routing device or server device) |
| *IP_{C}* | Locator address of a client device 1, *C* |
| *IP_{S}* | Locator address of a (particular) server device 3, S of the service function currently serving the client device 1, *C* |
| *IP_{S'}* | Locator address of a (specific) server device 3', *S'* of the service function prospectively serving the client device 1, *C* |

FIG. 2 illustrates a client device 1, a routing device 2, a server device 3, 3' and interrelated flow diagrams of associated methods 4, 5, 6 of operating said devices, in accordance with the disclosure of patent application PCT/EP2022/064615.

As briefly outlined in the following and explained in more detail in the above-identified patent application, the devices 1, 2, 3, 3' are designed to interwork with one another so as to establish a secure anycast communication session between the client device 1 and any one of a plurality of server devices 3, 3', *SFₙ* of a service function *SF.*

In the exemplary scenario of FIGs. 1 and 2, the respective server device 3, 3' hosting a service instance *SFₙ* of the service function *SF* may issue a service announcement *ADV* for that service function *SF.* Such information may be piggy-backed on messages of routing protocols.

Based on said service announcements *ADV,* the respective routing device 2 may establish a forwarding table *FT* being indicative of a reachability of the dispersed service instances *SFₙ* of the service function *SF.*

Based on the reachability information maintained in the forwarding table *FT,* the respective routing device 2 may forward service request *SREQ* messages issued by the respective client device 1 to any particular server device 3 of the plurality of server devices 3, 3' hosting a particular service instances *SFᵢ.* The service request *SREQ* message includes payload data.

Responsive to a service request *SREQ* message, the client device 1 may receive a service response *SRES* message issued by the particular server device 3. The service response *SRES* message includes payload data.

The client device 1 may maintain an affinity with the particular server device 3 / service instance *SFᵢ* by sending subsequent affinity request *AREQ* messages to a locator address of the particular server device 3.

Responsive to an affinity request *AREQ* message, the client device 1 may receive an affinity response *ARES* message issued by the particular server device 3.

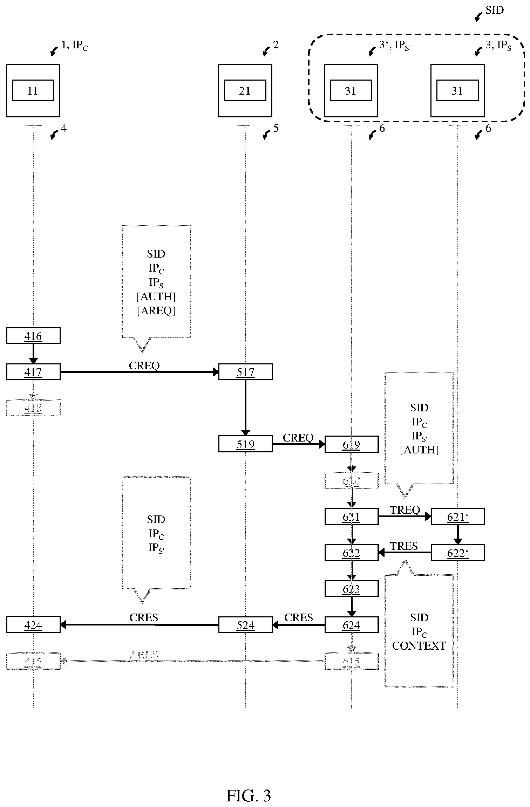

As already indicated above, the workflow of FIG. 2 sets the background for the workflow of FIG. 3 which comes into play when the serving instance *SFᵢ* becomes non-optimal, e.g., is overloaded or involves too much latency, with client mobility possibly causing such change.

FIG. 3 illustrates a client device 1, a routing device 2 and server devices 3, 3' in accordance with the present disclosure and interrelated flow diagrams of associated methods 4, 5, 6 of operating said devices in accordance with the present disclosure.

The client device 1, the routing device 2 and the (particular) server device 3 generally correspond to the devices 1, 2, 3 of FIG. 2. The (particular) server device 3 is to host a service instance *SFᵢ* of the service function *SF* that currently serves the client device 1. An additional (specific) server device 3' is to host a service instance *SFⱼ* of the same service function *SF* that prospectively serves the client device 1.

Like the devices 1, 2, 3 of FIG. 2, the devices 1, 2, 3, 3' of FIG. 3 are designed to interwork with one another so as to establish an anycast communication session between the client device 1 and any (particular) one of a plurality of server devices 3, 3' hosting the service instance *SFᵢ* of the service function *SF.* However, the devices 1, 2, 3, 3' of FIG. 3 are additionally designed to interwork with one another in such a way so as to re-establish the anycast communication session between the client device 1 and any (specific) other one of the plurality of server devices 3, 3' hosting a service instance *SFⱼ* of the same service function *SF.*

The re-establishing of the anycast communication session, which may be the secure anycast communication session of FIG. 2, may be achieved as follows:
The processor 11 of the client device 1 is configured to obtain 416 a trigger for the re-establishing of the anycast communication session. This trigger may comprise one of: a handover indication concerning the client device 1, a latency or throughput measurement from the particular server device 3 of the service function *SF* currently serving the client device 1, and a timeout indication concerning a periodic re-establishing of the anycast communication session. This reflects the design idea that the client device 1 is to trigger in-session instance mobility (i.e. the transaction handoff). In doing so, the client device 1 may use own triggers, like handover trigger or measurements, or use external data (e.g., measurements) as the trigger. The triggers here are not limited to specific ones but can be anything that may indicate the need for changing the currently serving service instance. This is applicable for many use cases, such as client mobility, changed network conditions, new connectivity availability, etc. As such, transaction mobility is client-initiated although triggers may come from other sources, such as network management, network functions (e.g., AMF for handover). This places the client in control over sending affinity requests to right service, simplifying the realization.

The processor 11 of the client device 1 is further configured to send 417 a calibration request *CREQ* message to the routing device 2 being adjacent to the client device 1. The calibration request *CREQ* message comprises the identifier *SID* of the service function *SF,* a locator address *IP_{C}* of the client device 1, and a locator address *IP_{S}* of a particular server device 3 of the service function *SF* currently serving the client device 1. The calibration request *CREQ* message may further comprise connection-specific data, such as an authentication token *AUTH.* As such, any connection-specific information needed for a possible transaction handover, e.g., the authentication token or similar, is provided. The calibration request *CREQ* message may further comprise an affinity request *AREQ* message to the service function *SF* being associated with the identifier *SID.* This means that in-request data may be used to convey an affinity request for 0-RTT transaction mobility. The calibration request *CREQ* message may be encapsulated in an IPv6 extension header.

The processor 11 of the client device 1 may further be configured to postpone 418 any affinity request *AREQ* to the service function *SF* being associated with the identifier *SID* until receipt of a calibration response *CRES* message.

The processor 21 of the routing device 2 is configured to receive 517 the calibration request *CREQ* message from the client device 1.

The processor 21 of the routing device 2 is further configured to forward 519 the calibration request *CREQ* message to any specific server device 3' of the plurality of server devices 3, 3' in accordance with a forwarding table *FT* of the routing device 2. The specific server device 3' prospectively serves the client device 1 and is different from the particular server device 3 that currently serves the client device 1. In other words, the ingress SAR schedules the calibration request *CREQ* message using the same criteria as for the service request *SREQ* message.

The processor 31 of the specific server device 3' is configured to receive 619 the calibration request *CREQ* message issued by the client device 1.

The processor 31 of the specific server device 3' may further be configured to validate 620 the received calibration request *CREQ* message. More specifically, as the chosen service instance *SFⱼ* hosted by the specific server device 3' receives the calibration request *CREQ* message, it will retrieve the locator address *IP_{S}* of the particular server device 3 of the service function *SF* currently serving the client device 1 (i.e., the IP address being associated with the currently serving instance *SFᵢ*) and initiate a context/state transfer from said instance.

The processor 31 of the specific server device 3' is further configured to send 621 a transfer request *TREQ* message towards the particular server device 3. The transfer request *TREQ* message comprises the identifier *SID* of the service function *SF,* the locator address *IP_{C}* of the client device 1, and a locator address *IP_{S'}* of the (specific) server device 3' prospectively serving the client device 1.

The processor 31 of the particular server device 3 may further be configured to: receive 621' the transfer request *TREQ* message from the specific server device 3' prospectively serving the client device 1; and to send 622' a transfer response *TRES* message to the specific server device 3'. The transfer response *TRES* message comprises the identifier *SID* of the service function *SF,* the locator address *IP_{C}* of the client device 1, and context data *CONTEXT* associated with the anycast communication session with the particular server device 3 currently serving the client device 1.

The processor 31 of the specific server device 3' is further configured to receive 622 the transfer response *TRES* message from the particular server device 3, and to configure 623 or re-establish the anycast communication session with the client device 1 based on the received context data *CONTEXT.* Upon finishing the context/state transfer, the server device 3' prospectively serving the client device 1 will respond to the same via ROSA, including its own locator address *IP_{S'}*:

Accordingly, the processor 31 of the specific server device 3' is further configured to send 624 a calibration response *CRES* message towards the client device 1. The calibration response *CRES* message comprises the identifier *SID* of the service function *SF,* the locator address *IP_{C}* of the client device 1, and the locator address *IP_{S'}* of the server device 3' prospectively serving the client device 1. The calibration response *CRES* message may be encapsulated in an IPv6 extension header. To avoid firewall issues, the specific server device 3' will need to send 624 the calibration response *CRES* message to the client-facing routing device 2 (i.e., ingress SAR), which is configured to forward 524 the calibration response *CRES* message received from the specific server device 3' to the client device 1.

The processor 11 of the client device 1 is further configured to receive 424 the calibration response *CRES* message from the routing device 2. When the client device 1 receives the calibration response *CRES* message, it will retrieve the new locator address *IP_{S'}* of the server device 3' prospectively serving the client device 1 and associate any future affinity request *AREQ* with said locator address.

At this point, the anycast communication session between the client device 1 and the service instance *SFᵢ* hosted on the particular server device 3 has been re-established between the client device 1 and the service instance *SFⱼ* hosted on the specific server device 3'.

If the calibration request *CREQ* message received 619 by the specific server device 3'did include an affinity request *AREQ* message to the service function *SF* being associated with the identifier *SID,* the specific server device 3' is configured to send 615 an appropriate affinity response message *ARES* towards the client device 1. The affinity response message *ARES* may comprise payload data.

In turn, the client device 1 is configured to receive 415 the affinity response message *ARES* from the specific server device 3'.

The methods 4, 5, 6 of the fourth, fifth and sixth aspects and the devices 1, 2, 3⁽'⁾ of the first, second and third aspects define the same matter in terms of method and device features, respectively.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A client device (1) for re-establishing an anycast communication session with any one of a plurality of server devices (3, 3') of a service function, SF, being associated with an identifier, SID, the client device (1) comprising a processor (11), **characterized in that** the processor (11) is being configured to:
- obtain (416) a trigger for the re-establishing of the anycast communication session;
- send (417) a calibration request message, CREQ, to a routing device (2) being adjacent to the client device (1), the CREQ comprising:
∘ the SID of the SF,
∘ a locator address, IP_{C}, of the client device (1),
∘ a locator address, IP_{S}, of a particular server device (3) of the SF currently serving the client device (1); and
- receive (424) a calibration response message, CRES, from the routing device (2), the CRES comprising:
∘ the SID of the SF,
∘ the IP_{C} of the client device (1), and
∘ a locator address, IP_{S'}, of a specific server device (3') of the SF prospectively serving the client device (1).

2. The client device (1) of claim 1,
the trigger comprising one of:
∘ a handover indication concerning the client device (1),
∘ a latency or throughput measurement from the particular server device (3) of the service function (SF) currently serving the client device (1), and
∘ a timeout indication concerning a periodic re-establishing of the anycast communication session.

3. The client device (1) of claim 1 or claim 2,
the CREQ further comprising at least one of:
∘ connection-specific data, such as an authentication token, AUTH;
∘ an affinity request message, AREQ, to the SF being associated with the SID.

4. The client device (1) of any one of the claims 1 to 3,
the processor (11) further being configured to:
- postpone (418) any AREQ to the SF being associated with the SID until receipt of a CRES.

5. The client device (1) of any one of the claims 1 to 4,
the CREQ being encapsulated in an IPv6 extension header; and/or
the CRES being encapsulated in an IPv6 extension header.

6. A routing device (2) for re-establishing an anycast communication session with any one of a plurality of server devices (3, 3') of a service function, SF, being associated with an identifier, SID, the routing device (1) comprising a processor (21), **characterized in that** the processor (21) is being configured to:
- receive (517) a calibration request message, CREQ, from a client device (1), the CREQ comprising:
∘ the SID of the SF,
∘ a locator address, IP_{C}, of the client device (1), and
∘ a locator address, IP_{S}, of a particular server device (3) of the SF currently serving the client device (1);
- forward (519) the CREQ to any specific server device (3') of the plurality of server devices (3, 3') in accordance with a forwarding table, FT, of the routing device (2), the specific server device (3') prospectively serving the client device (1) and being different from the particular server device (3); and
- forward (524) a calibration response message, CRES, received from the specific server device (3') to the client device (1).

7. The routing device (2) of claim 6,
the CREQ further comprising at least one of:
∘ connection-specific data, such as an authentication token, AUTH;
∘ an affinity request message, AREQ, to the SF being associated with the SID.

8. The routing device (2) of anyone of the claims 6 or 7,
the processor (21) further being configured to:
- receive (501), from an adjacent device (2, 3, 3'), a service announcement message, ADV, of a server device (3, 3') of the plurality of server devices (3, 3'), the ADV comprising:
∘ the SID of the SF, and
∘ an identifier, TRES, of the server device (3, 3');
- query (502) the FT of the routing device (2) for an entry (SID; SFᵢ; IP_{NH}) comprising both the SID of the SF and the TRES of the server device (3, 3'), and in response to unsuccessful querying:
- populate (5021) the FT with the entry (SID; SFᵢ; IP_{NH}) comprising:
∘ the SID of the SF,
∘ the TRES of the server device (3, 3'), and
∘ a locator address, IP_{NH}, being indicative of the adjacent device (2, 3, 3'); and
- re-advertise (5022) the ADV to other routing devices (2).

9. A server device (3, 3') for re-establishing an anycast communication session with any one of a plurality of server devices (3, 3') of a service function, SF, being associated with an identifier, SID, the server device (3, 3') comprising a processor (31), **characterized in that** the processor (31) is being configured to:
- receive (619) a calibration request message, CREQ, issued by a client device (1), the CREQ comprising:
∘ the SID of the SF,
∘ a locator address, IP_{C}, of the client device (1), and
∘ a locator address, IPs, of a particular server device (3) of the SF currently serving the client device (1);
- send (621) a transfer request message, TREQ, towards the particular server device (3), the TREQ comprising:
∘ the SID of the SF,
∘ the IP_{C} of the client device (1), and
∘ a locator address, IP_{S'}, of the server device (3') prospectively serving the client device (1);
- receive (622) a transfer response message, TRES, from the particular server device (3), the TRES comprising:
∘ the SID of the SF,
∘ the IP_{C} of the client device (1), and
∘ context data, CONTEXT, associated with the anycast communication session with the particular server device (3);
- configure (623) an anycast communication session with the client device (1) based on the received CONTEXT; and
- send (624) a calibration response message, CRES, towards the client device (1), the CRES comprising:
∘ the SID of the SF,
∘ the IP_{C} of the client device (1), and
∘ the IP_{S'} of the server device (3') prospectively serving the client device (1).

10. The server device (3, 3') of claim 9,
the processor (31) further being configured to:
- receive (621') a transfer request message, TREQ, from a specific server device (3') prospectively serving the client device (1), the TREQ comprising:
∘ the SID of the SF,
∘ the IP_{C} of the client device (1), and
∘ a locator address, IP_{S'}, of the specific server device (3');
- send (622') a transfer response message, TRES, to the specific server device (3'), the TRES comprising:
∘ the SID of the SF,
∘ the IP_{C} of the client device (1), and
∘ context data, CONTEXT, associated with the anycast communication session with the particular server device (3) currently serving the client device (1).

11. The server device (3, 3') of claim 9 or 10,
the processor (31) further being configured to:
- advertise (601) a service announcement message, ADV, the ADV comprising:
∘ the SID of the SF, and
∘ an identifier, TRES, of the server device (3, 3').

12. A method (4) performed by a client device (1) for re-establishing an anycast communication session with any one of a plurality of server devices (3, 3') of a service function, SF, being associated with an identifier, SID, **characterized in that** the method (4) comprises:
- obtaining (416) a trigger for the re-establishing of the anycast communication session;
- sending (417) a calibration request message, CREQ, to a routing device (2) being adjacent to the client device (1), the CREQ comprising:
∘ the SID of the SF,
∘ a locator address, IP_{C}, of the client device (1), and
∘ a locator address, IP_{S}, of a particular server device (3) of the SF currently serving the client device (1); and
- receiving (424) a calibration response message, CRES, from the routing device (2), the CRES comprising:
∘ the SID of the SF,
∘ the IP_{C} of the client device (1), and
∘ a locator address, IP_{S'}, of a specific server device (3') of the SF prospectively serving the client device (1).

13. A method (5) performed by a routing device (2) for re-establishing an anycast communication session with any one of a plurality of server devices (3, 3') of a service function, SF, being associated with an identifier, SID, **characterized in that** the method (5) comprises:
- receiving (517) a calibration request message, CREQ, from a client device (1), the CREQ comprising:
∘ the SID of the SF,
∘ a locator address, IP_{C}, of the client device (1), and
∘ a locator address, IP_{S}, of a particular server device (3) of the SF currently serving the client device (1);
- forwarding (519) the CREQ to any specific server device (3') of the plurality of server devices (3, 3') in accordance with a forwarding table, FT, of the routing device (2), the specific server device (3') prospectively serving the client device (1) and being different from the particular server device (3); and
- forwarding (524) a calibration response message, CRES, received from the specific server device (3') to the client device (1).

14. A method (6) performed by a server device (3') for re-establishing an anycast communication session with any one of a plurality of server devices (3, 3') of a service function, SF, being associated with an identifier, SID, **characterized in that** the method (6) comprises:
- receiving (619) a calibration request message, CREQ, issued by a client device (1), the CREQ comprising:
∘ the SID of the SF,
∘ a locator address, IP_{C}, of the client device (1), and
∘ a locator address, IP_{S}, of a particular server device (3) of the SF currently serving the client device (1);
- sending (621) a transfer request message, TREQ, towards the particular server device (3), the TREQ comprising:
∘ the SID of the SF,
∘ the IP_{C} of the client device (1), and
∘ a locator address, IP_{S'}, of the server device (3') prospectively serving the client device (1);
- receiving (622) a transfer response message, TRES, from the particular server device (3), the TRES comprising:
∘ the SID of the SF,
∘ the IP_{C} of the client device (1), and
∘ context data, CONTEXT, associated with the anycast communication session with the particular server device (3);
- configuring (623) an anycast communication session with the client device (1) based on the received CONTEXT; and
- sending (624) a calibration response message, CRES, towards the client device (1), the CRES comprising:
∘ the SID of the SF,
∘ the IP_{C} of the client device (1), and
∘ the IP_{S'} of the server device (3') prospectively serving the client device (1).

15. A computer program, comprising executable instructions which, when executed by a processor (41; 21; 31), cause the processor (41; 21; 31) to perform the method (4; 5; 6) of any one of the claims 12 to 14.

## Patentansprüche

1. Clientgerät (1) zum Wiederherstellen einer Anycast-Kommunikationssitzung mit einem beliebigen von einer Vielzahl an Servergeräten (3, 3') einer Dienstfunktion, SF, die mit einer Kennung, SID, verknüpft sind, wobei das Clientgerät (1) einen Prozessor (11) umfasst, **dadurch gekennzeichnet, dass** der Prozessor (11) zu Folgendem konfiguriert ist:
- Erhalten (416) eines Auslösers für das Wiederherstellen der Anycast-Kommunikationssitzung;
- Senden (417) einer Kalibrierungsanforderungsnachricht, CREQ, an ein Routing-Gerät (2), das mit dem Clientgerät (1) benachbart ist, wobei die CREQ Folgendes umfasst:
∘ die SID der SF,
∘ eine Locator-Adresse, IP_{C}, des Clientgeräts (1),
∘ eine Locator-Adresse, IP_{S}, eines bestimmten Servergeräts (3) der SF, die derzeit dem Clientgerät (1) dient; und
- Empfangen (424) einer Kalibrierungsantwortnachricht, CRES, von dem Routing-Gerät (2), wobei die CRES Folgendes umfasst:
∘ die SID der SF,
∘ die IP_{C} des Clientgeräts (1) und
∘ eine Locator-Adresse, IP_{S'}, eines spezifischen Servergeräts (3') der SF, die voraussichtlich dem Clientgerät (1) dient.

2. Clientgerät (1) nach Anspruch 1,
wobei der Auslöser eines der Folgenden umfasst:
∘ eine Übergabeanzeige bezüglich des Clientgeräts (1),
∘ eine Latenz- oder Durchsatzmessung von dem bestimmten Servergerät (3) der Dienstfunktion (SF), die derzeit dem Clientgerät (1) dient, und
∘ eine Zeitüberschreitungsanzeige bezüglich eines periodischen Wiederherstellens der Anycast-Kommunikationssitzung.

3. Clientgerät (1) nach Anspruch 1 oder Anspruch 2,
wobei die CREQ ferner mindestens eines der Folgenden umfasst:
∘ verbindungsspezifische Daten, wie zum Beispiel ein Authentifizierungstoken, AUTH;
∘ eine Affinitätsanforderungsnachricht, AREQ, an die SF, die mit der SID verknüpft ist.

4. Clientgerät (1) nach einem der Ansprüche 1 bis 3,
wobei der Prozessor (11) ferner zu Folgendem konfiguriert ist:
- Verschieben (418) jeglicher AREQ an die SF, die mit der SID verknüpft ist, bis zum Erhalt einer CRES.

5. Clientgerät (1) nach einem der Ansprüche 1 bis 4,
wobei die CREQ in einem IPv6-Erweiterungsheader gekapselt ist; und/oder
wobei die CRES in einem IPv6-Erweiterungsheader gekapselt ist.

6. Routing-Gerät (2) zum Wiederherstellen einer Anycast-Kommunikationssitzung mit einem beliebigen von einer Vielzahl an Servergeräten (3, 3') einer Dienstfunktion SF, die mit einer Kennung, SID, verknüpft sind, wobei das Routing-Gerät (1) einen Prozessor (21) umfasst, **dadurch gekennzeichnet, dass** der Prozessor (21) zu Folgendem konfiguriert ist:
- Empfangen (517) einer Kalibrierungsanforderungsnachricht, CREQ, von einem Clientgerät (1), wobei die CREQ Folgendes umfasst:
∘ die SID der SF,
∘ eine Locator-Adresse, IP_{C}, des Clientgeräts (1) und
∘ eine Locator-Adresse, IP_{S}, eines bestimmten Servergeräts (3) der SF, die derzeit dem Clientgerät (1) dient;
- Weiterleiten (519) der CREQ an ein spezifisches Servergerät (3') der Vielzahl an Servergeräten (3, 3') gemäß einer Weiterleitungstabelle, FT, des Routing-Geräts (2), wobei das spezifische Servergerät (3') voraussichtlich dem Clientgerät (1) dient und sich von dem bestimmten Servergerät (3) unterscheidet; und
- Weiterleiten (524) einer Kalibrierungsantwortnachricht, CRES, die von dem spezifischen Servergerät (3') empfangen wurde, an das Clientgerät (1).

7. Routing-Gerät (2) nach Anspruch 6,
wobei die CREQ ferner mindestens eines der Folgenden umfasst:
∘ verbindungsspezifische Daten, wie zum Beispiel ein Authentifizierungstoken, AUTH;
∘ eine Affinitätsanforderungsnachricht, AREQ, an die SF, die mit der SID verknüpft ist.

8. Routing-Gerät (2) nach einem der Ansprüche 6 oder 7,
wobei der Prozessor (21) ferner zu Folgendem konfiguriert ist:
- Empfangen (501), von einem benachbarten Gerät (2, 3, 3'), einer Dienstankündigungsnachricht, ADV, eines Servergeräts (3, 3') der Vielzahl an Servergeräten (3, 3'), wobei die ADV Folgendes umfasst:
∘ die SID der SF und
∘ eine Kennung, TRES, des Servergeräts (3, 3');
- Abfragen (502) der FT des Routing-Geräts (2) nach einem Eintrag (SID; SFᵢ; IP_{NH}), der sowohl die SID der SF als auch die TRES des Servergeräts (3, 3') umfasst, und als Antwort auf ein erfolgloses Abfragen:
- Füllen (5021) der FT mit dem Eintrag (SID; SFᵢ; IP_{NH}), umfassend:
∘ die SID der SF,
∘ die TRES des Servergeräts (3, 3') und
∘ eine Locator-Adresse, IP_{NH}, die das benachbarte Gerät (2, 3, 3') angibt; und
- erneutes Veröffentlichen (5022) der ADV an andere Routing-Geräte (2).

9. Servergerät (3, 3') zum Wiederherstellen einer Anycast-Kommunikationssitzung mit einem beliebigen von einer Vielzahl an Servergeräten (3, 3') einer Dienstfunktion, SF, die mit einer Kennung, SID, verknüpft sind, wobei das Servergerät (3, 3') einen Prozessor (31) umfasst, **dadurch gekennzeichnet, dass** der Prozessor (31) zu Folgendem konfiguriert ist:
- Empfangen (619) einer Kalibrierungsanforderungsnachricht, CREQ, die durch ein Clientgerät (1) ausgegeben wurde, wobei die CREQ Folgendes umfasst:
∘ die SID der SF,
∘ eine Locator-Adresse, IP_{C}, des Clientgeräts (1) und
∘ eine Locator-Adresse, IP_{S}, eines bestimmten Servergeräts (3) der SF, die derzeit dem Clientgerät (1) dient;
- Senden (621) einer Übertragungsanforderungsnachricht, TREQ, an das bestimmte Servergerät (3), wobei die TREQ Folgendes umfasst:
∘ die SID der SF,
∘ die IP_{C} des Clientgeräts (1) und
∘ eine Locator-Adresse, IP_{S'}, des Servergeräts (3'), das voraussichtlich dem Clientgerät (1) dient;
- Empfangen (622) einer Übertragungsantwortnachricht, TRES, von dem bestimmten Servergerät (3), wobei die TRES Folgendes umfasst:
∘ die SID der SF,
∘ die IP_{C} des Clientgeräts (1) und
∘ Kontextdaten, CONTEXT, die mit der Anycast-Kommunikationssitzung mit dem bestimmten Servergerät (3) verknüpft sind;
- Konfigurieren (623) einer Anycast-Kommunikationssitzung mit dem Clientgerät (1) basierend auf dem empfangenen CONTEXT; und
- Senden (624) einer Kalibrierungsantwortnachricht, CRES, an das Clientgerät (1), wobei die CRES Folgendes umfasst:
∘ die SID der SF,
∘ die IP_{C} des Clientgeräts (1) und
∘ die IP_{S'} des Servergeräts (3'), das voraussichtlich dem Clientgerät (1) dient.

10. Servergerät (3, 3') nach Anspruch 9,
wobei der Prozessor (31) ferner zu Folgendem konfiguriert ist:
- Empfangen (621') einer Übertragungsanforderungsnachricht, TREQ, von einem spezifischen Servergerät (3'), das voraussichtlich dem Clientgerät (1) dient, wobei die TREQ Folgendes umfasst:
∘ die SID der SF,
∘ die IP_{C} des Clientgeräts (1) und
∘ eine Locator-Adresse, IP_{S'}, des spezifischen Servergeräts (3');
- Senden (622') einer Übertragungsantwortnachricht, TRES, an das spezifische Servergerät (3'), wobei die TRES Folgendes umfasst:
∘ die SID der SF,
∘ die IP_{C} des Clientgeräts (1) und
∘ Kontextdaten, CONTEXT, die mit der Anycast-Kommunikationssitzung mit dem bestimmten Servergerät (3) verknüpft sind, das derzeit dem Clientgerät (1) dient.

11. Servergerät (3, 3') nach Anspruch 9 oder 10,
wobei der Prozessor (31) ferner zu Folgendem konfiguriert ist:
- Veröffentlichen (601) einer Serviceankündigungsnachricht, ADV, wobei die ADV Folgendes umfasst:
∘ die SID der SF und
∘ eine Kennung, TRES, des Servergeräts (3, 3').

12. Verfahren (4), das durch ein Clientgerät (1) zum Wiederherstellen einer Anycast-Kommunikationssitzung mit einem beliebigen von einer Vielzahl an Servergeräten (3, 3') einer Dienstfunktion, SF, die mit einer Kennung, SID, verknüpft sind, durchgeführt wird, **dadurch gekennzeichnet, dass** das Verfahren (4) Folgendes umfasst:
- Erhalten (416) eines Auslösers für das Wiederherstellen der Anycast-Kommunikationssitzung;
- Senden (417) einer Kalibrierungsanforderungsnachricht, CREQ, an ein Routing-Gerät (2), das mit dem Clientgerät (1) benachbart ist, wobei die CREQ Folgendes umfasst:
∘ die SID der SF,
∘ eine Locator-Adresse, IP_{C}, des Clientgeräts (1) und
∘ eine Locator-Adresse, IP_{S}, eines bestimmten Servergeräts (3) der SF, die derzeit dem Clientgerät (1) dient; und
- Empfangen (424) einer Kalibrierungsantwortnachricht, CRES, von dem Routing-Gerät (2), wobei die CRES Folgendes umfasst:
∘ die SID der SF,
∘ die IP_{C} des Clientgeräts (1) und
∘ eine Locator-Adresse, IP_{S'}, eines spezifischen Servergeräts (3') der SF, die voraussichtlich dem Clientgerät (1) dient.

13. Verfahren (5), das durch ein Routing-Gerät (2) zum Wiederherstellen einer Anycast-Kommunikationssitzung mit einem beliebigen von einer Vielzahl an Servergeräten (3, 3') einer Dienstfunktion, SF, die mit einer Kennung, SID, verknüpft sind, durchgeführt wird, **dadurch gekennzeichnet, dass** das Verfahren (5) Folgendes umfasst:
- Empfangen (517) einer Kalibrierungsanforderungsnachricht, CREQ, von einem Clientgerät (1), wobei die CREQ Folgendes umfasst:
∘ die SID der SF,
∘ eine Locator-Adresse, IP_{C}, des Clientgeräts (1) und
∘ eine Locator-Adresse, IP_{S}, eines bestimmten Servergeräts (3) der SF, die derzeit dem Clientgerät (1) dient;
- Weiterleiten (519) der CREQ gemäß einer Weiterleitungstabelle, FT, des Routing-Geräts (2) an ein spezifisches Servergerät (3') der Vielzahl an Servergeräten (3, 3'), wobei das spezifische Servergerät (3') voraussichtlich dem Clientgerät (1) dient und sich von dem bestimmten Servergerät (3) unterscheidet; und
- Weiterleiten (524) einer Kalibrierungsantwortnachricht, CRES, die von dem spezifischen Servergerät (3') empfangen wurde, an das Clientgerät (1).

14. Verfahren (6), das durch ein Servergerät (3') zum Wiederherstellen einer Anycast-Kommunikationssitzung mit einem beliebigen von einer Vielzahl an Servergeräten (3, 3') einer Dienstfunktion, SF, die mit einer Kennung, SID, verknüpft sind, durchgeführt wird, **dadurch gekennzeichnet, dass** das Verfahren (6) Folgendes umfasst:
- Empfangen (619) einer Kalibrierungsanforderungsnachricht, CREQ, die durch ein Clientgerät (1) ausgegeben wurde, wobei die CREQ Folgendes umfasst:
∘ die SID der SF,
∘ eine Locator-Adresse, IP_{C}, des Clientgeräts (1) und
∘ eine Locator-Adresse, IP_{S}, eines bestimmten Servergeräts (3) der SF, die derzeit dem Clientgerät (1) dient;
- Senden (621) einer Übertragungsanforderungsnachricht, TREQ, an das bestimmte Servergerät (3), wobei die TREQ Folgendes umfasst:
∘ die SID der SF,
∘ die IP_{C} des Clientgeräts (1) und
∘ eine Locator-Adresse, IP_{S'}, des Servergeräts (3'), das voraussichtlich dem Clientgerät (1) dient;
- Empfangen (622) einer Übertragungsantwortnachricht, TRES, von dem bestimmten Servergerät (3), wobei die TRES Folgendes umfasst:
∘ die SID der SF,
∘ die IP_{C} des Clientgeräts (1) und
∘ Kontextdaten, CONTEXT, die mit der Anycast-Kommunikationssitzung mit dem bestimmten Servergerät (3) verknüpft sind;
- Konfigurieren (623) einer Anycast-Kommunikationssitzung mit dem Clientgerät (1) basierend auf dem empfangenen CONTEXT; und
- Senden (624) einer Kalibrierungsantwortnachricht, CRES, an das Clientgerät (1), wobei die CRES Folgendes umfasst:
∘ die SID der SF,
∘ die IP_{C} des Clientgeräts (1) und
∘ die IP_{S'} des Servergeräts (3'), das voraussichtlich dem Clientgerät (1) dient.

15. Computerprogramm, umfassend ausführbare Anweisungen, die bei Ausführung durch einen Prozessor (41; 21; 31) den Prozessor (41; 21; 31) dazu veranlassen, das Verfahren (4; 5; 6) nach einem der Ansprüche 12 bis 14 durchzuführen.

## Revendications

1. Dispositif client (1) pour le rétablissement d'une session de communication anycast avec l'un quelconque d'une pluralité de dispositifs serveurs (3, 3') d'une fonction de service, SF, étant associée à un identifiant, SID, le dispositif client (1) comprenant un processeur (11), et **caractérisé en ce que** le processeur (11) est configuré pour :
- obtenir (416) un déclencheur pour le rétablissement de la session de communication anycast ;
- envoyer (417) un message de demande d'étalonnage, CREQ, à un dispositif d'acheminement (2) étant adjacent au dispositif client (1), le CREQ comprenant :
∘ le SID de la SF,
∘ une adresse de localisation, IP_{C}, du dispositif client (1),
∘ une adresse de localisation, IP_{S}, d'un dispositif serveur particulier (3) de la SF desservant actuellement le dispositif client (1) ; et
- recevoir (424) un message de réponse d'étalonnage, CRES, à partir du dispositif d'acheminement (2), le CRES comprenant :
∘ le SID de la SF,
∘ l'adresse IP_{C} du dispositif client (1), et
∘ une adresse de localisation, IP_{S'}, d'un dispositif serveur spécifique (3') de la SF desservant prospectivement le dispositif client (1).

2. Dispositif client (1) selon la revendication 1,
le déclencheur comprenant un des éléments suivants :
∘ une indication de transfert intercellulaire concernant le dispositif client (1),
∘ une mesure de latence ou de débit du dispositif serveur particulier (3) de la fonction de service (SF) desservant actuellement le dispositif client (1), et
∘ une indication de délai d'attente concernant un rétablissement périodique de la session de communication anycast.

3. Dispositif client (1) selon la revendication 1 ou de la revendication 2,
le CREQ comprenant en outre au moins un des éléments suivants :
∘ des données spécifiques à la connexion, telles qu'un jeton d'authentification, AUTH ;
∘ un message de demande d'affinité, AREQ, à la SF étant associée au SID.

4. Dispositif client (1) selon l'une quelconque des revendications 1 à 3,
le processeur (11) étant en outre configuré pour :
- reporter (418) tout AREQ à la SF étant associée au SID jusqu'à réception d'un CRES.

5. Dispositif client (1) selon l'une quelconque des revendications 1 à 4,
le CREQ étant encapsulé dans un en-tête d'extension IPv6 ; et/ou
le CRES étant encapsulé dans un en-tête d'extension IPv6.

6. Dispositif d'acheminement (2) pour le rétablissement d'une session de communication anycast avec l'un quelconque d'une pluralité de dispositifs serveurs (3, 3') d'une fonction de service, SF, étant associée à un identifiant, SID, le dispositif d'acheminement)(1) comprenant un processeur (21), **caractérisé en ce que** le processeur (21) est configuré pour :
- recevoir (517) un message de demande d'étalonnage, CREQ, à partir d'un dispositif client (1), le CREQ comprenant :
∘ le SID de la SF,
∘ une adresse de localisation, IP_{C}, du dispositif client (1), et
∘ une adresse de localisation, IP_{S}, d'un dispositif serveur particulier (3) de la SF desservant actuellement le dispositif client (1) ;
- transmettre (519) le CREQ à un dispositif serveur spécifique (3') de la pluralité de dispositifs serveurs (3, 3') conformément à une table de routage, FT, du dispositif d'acheminement (2), le dispositif serveur spécifique (3') desservant prospectivement le dispositif client (1) et étant différent du dispositif serveur particulier (3) ; et
- transmettre (524) un message de réponse d'étalonnage, CRES, reçu à partir du dispositif serveur spécifique (3') au dispositif client (1).

7. Dispositif d'acheminement (2) selon la revendication 6,
le CREQ comprenant en outre au moins un des éléments suivants :
∘ des données spécifiques à la connexion, telles qu'un jeton d'authentification, AUTH ;
∘ un message de demande d'affinité, AREQ, à la SF étant associée au SID.

8. Dispositif d'acheminement (2) selon l'une quelconque des revendications 6 ou 7,
le processeur (21) étant en outre configuré pour :
- recevoir (501), à partir d'un dispositif adjacent (2, 3, 3'), un message d'annonce de service, ADV, d'un dispositif serveur (3, 3') de la pluralité de dispositifs serveurs (3, 3'), l'ADV comprenant :
∘ le SID de la SF, et
∘ un identifiant, TRES, du dispositif serveur (3, 3') ;
- interroger (502) la FT du dispositif d'acheminement (2) pour une entrée (SID ; SFᵢ ; IP_{NH}) comprenant à la fois le SID de la SF et le TRES du dispositif serveur (3, 3'), et en réponse à une interrogation infructueuse :
- remplir (5021) le FT avec l'entrée (SID ; SFᵢ ; IP_{NH}) comprenant :
∘ le SID de la SF,
∘ le TRES du dispositif serveur (3, 3'), et
∘ une adresse de localisation, IP_{NH}, étant indicative du dispositif adjacent (2, 3, 3') ; et
- republier (5022) l'ADV à d'autres dispositifs d'acheminement (2).

9. Dispositif serveur (3, 3') pour le rétablissement d'une session de communication anycast avec l'un quelconque d'une pluralité de dispositifs serveurs (3, 3') d'une fonction de service, SF, étant associée à un identifiant, SID, le dispositif serveur (3, 3') comprenant un processeur (31), et **caractérisé en ce que** le processeur (31) est configuré pour :
- recevoir (619) un message de demande d'étalonnage, CREQ, délivré par un dispositif client (1), le CREQ comprenant :
∘ le SID de la SF,
∘ une adresse de localisation, IP_{C}, du dispositif client (1), et
∘ une adresse de localisation, IP_{S}, d'un dispositif serveur particulier (3) de la SF desservant actuellement le dispositif client (1) ;
- envoyer (621) un message de demande de transfert, TREQ, vers le dispositif serveur particulier (3), le TREQ comprenant :
∘ le SID de la SF,
∘ l'adresse IP_{C} du dispositif client (1), et
∘ une adresse de localisation, IP_{S'}, du dispositif serveur (3') desservant prospectivement le dispositif client (1) ;
- recevoir (622) un message de réponse de transfert, TRES, à partir du dispositif serveur particulier (3), le TRES comprenant :
∘ le SID de la SF,
∘ l'adresse IP_{C} du dispositif client (1), et
∘ des données de contexte, CONTEXT, associées à la session de communication anycast avec le dispositif serveur particulier (3) ;
- configurer (623) une session de communication anycast avec le dispositif client (1) sur la base du CONTEXT reçu ; et
- envoyer (624) un message de réponse d'étalonnage, CRES, vers le dispositif client (1), le CRES comprenant :
∘ le SID de la SF,
∘ l'adresse IP_{C} du dispositif client (1), et
∘ l'adresse IP_{S'} du dispositif serveur (3') desservant prospectivement le dispositif client (1).

10. Dispositif serveur (3, 3') selon la revendication 9,
le processeur (31) étant en outre configuré pour :
- recevoir (621') un message de demande de transfert, TREQ, à partir d'un dispositif serveur spécifique (3') desservant potentiellement le dispositif client (1), le TREQ comprenant :
∘ le SID de la SF,
∘ l'adresse IP_{C} du dispositif client (1), et
∘ une adresse de localisation, IP_{S'}, du dispositif serveur spécifique (3') ;
- envoyer (622') un message de réponse de transfert, TRES, au dispositif serveur spécifique (3'), le TRES comprenant :
∘ le SID de la SF,
∘ l'adresse IP_{C} du dispositif client (1), et
∘ des données de contexte, CONTEXT, associées à la session de communication anycast avec le dispositif serveur particulier (3) desservant actuellement le dispositif client (1).

11. Dispositif serveur (3, 3') selon la revendication 9 ou 10, le processeur (31) étant en outre configuré pour :
- diffuser (601) un message d'annonce de service, ADV, l'ADV comprenant :
∘ le SID de la SF, et
∘ un identifiant, TRES, du dispositif serveur (3, 3').

12. Procédé (4) réalisé par un dispositif client (1) pour le rétablissement d'une session de communication anycast avec l'un quelconque d'une pluralité de dispositifs serveurs (3, 3') d'une fonction de service, SF, étant associée à un identifiant, SID, **caractérisé en ce que** le procédé (4) comprend :
- l'obtention (416) d'un déclencheur pour le rétablissement de la session de communication anycast ;
- l'envoi (417) d'un message de demande d'étalonnage, CREQ, à un dispositif d'acheminement (2) étant adjacent au dispositif client (1), le CREQ comprenant :
∘ le SID de la SF,
∘ une adresse de localisation, IP_{C}, du dispositif client (1), et
∘ une adresse de localisation, IP_{S}, d'un dispositif serveur particulier (3) de la SF desservant actuellement le dispositif client (1) ; et
- la réception (424) d'un message de réponse d'étalonnage, CRES, à partir du dispositif d'acheminement (2), le CRES comprenant :
∘ le SID de la SF,
∘ l'adresse IP_{C} du dispositif client (1), et
∘ une adresse de localisation, IP_{S'}, d'un dispositif serveur spécifique (3') de la SF desservant prospectivement le dispositif client (1).

13. Procédé (5) réalisé par un dispositif d'acheminement (2) pour le rétablissement d'une session de communication anycast avec l'un quelconque d'une pluralité de dispositifs serveurs (3, 3') d'une fonction de service, SF, étant associée à un identifiant, SID, **caractérisé en ce que** le procédé (5) comprend :
- la réception (517) d'un message de demande d'étalonnage, CREQ, à partir d'un dispositif client (1), le CREQ comprenant :
∘ le SID de la SF,
∘ une adresse de localisation, IP_{C}, du dispositif client (1), et
∘ une adresse de localisation, IP_{S}, d'un dispositif serveur particulier (3) de la SF desservant actuellement le dispositif client (1) ;
- la transmission (519) du CREQ à un dispositif serveur spécifique (3') de la pluralité de dispositifs serveurs (3, 3') conformément à une table de routage, FT, du dispositif d'acheminement (2), le dispositif serveur spécifique (3') desservant prospectivement le dispositif client (1) et étant différent du dispositif serveur particulier (3) ; et
- la transmission (524) d'un message de réponse d'étalonnage, CRES, reçu à partir du dispositif serveur spécifique (3') au dispositif client (1).

14. Procédé (6) réalisé par
un dispositif serveur (3') pour le rétablissement d'une session de communication anycast avec l'un quelconque d'une pluralité de dispositifs serveurs (3, 3') d'une fonction de service, SF, étant associée à un identifiant, SID, **caractérisé en ce que** le procédé (6) comprend :
- la réception (619) d'un message de demande d'étalonnage, CREQ, délivré par un dispositif client (1), le CREQ comprenant :
∘ le SID de la SF,
∘ une adresse de localisation, IP_{C}, du dispositif client (1), et
∘ une adresse de localisation, IP_{S}, d'un dispositif serveur particulier (3) de la SF desservant actuellement le dispositif client (1) ;
- l'envoi (621) d'un message de demande de transfert, TREQ, vers le dispositif serveur particulier (3), le TREQ comprenant :
∘ le SID de la SF,
∘ l'adresse IP_{C} du dispositif client (1), et
∘ une adresse de localisation, IP_{S'}, du dispositif serveur (3') desservant prospectivement le dispositif client (1) ;
- la réception (622) d'un message de réponse de transfert, TRES, à partir du dispositif serveur particulier (3), le TRES comprenant :
∘ le SID de la SF,
∘ l'adresse IP_{C} du dispositif client (1), et
∘ des données de contexte, CONTEXT, associées à la session de communication anycast avec le dispositif serveur particulier (3) ;
- la configuration (623) d'une session de communication anycast avec le dispositif client (1) sur la base du CONTEXT reçu ; et
- l'envoi (624) d'un message de réponse d'étalonnage, CRES, vers le dispositif client (1), le CRES comprenant :
∘ le SID de la SF,
∘ l'adresse IP_{C} du dispositif client (1), et
∘ l'adresse IP_{S'} du dispositif serveur (3') desservant prospectivement le dispositif client (1).

15. Programme informatique, comprenant des instructions exécutables qui, lorsqu'elles sont exécutées par un processeur (41 ; 21 ; 31), amènent le processeur (41 ; 21 ; 31) à réaliser le procédé (4 ; 5 ; 6) selon l'une quelconque des revendications 12 à 14.
